Europäisches Patentamt

European Patent Office

Office européen des brevets

(19)

(11) Veröffentlichungsnummer : **0 125 377**
**B1**

(12)

# EUROPÄISCHE PATENTSCHRIFT

(45) Veröffentlichungstag der Patentschrift :
27.07.88

(51) Int. Cl.⁴ : **F 16 D 13/71**

(21) Anmeldenummer : 84100726.3

(22) Anmeldetag : 24.01.84

(54) **Kupplung mit Membranfeder-Reibteller, insbesondere für Kraftfahrzeuge.**

(30) Priorität : 16.05.83 HU 168883

(43) Veröffentlichungstag der Anmeldung :
21.11.84 Patentblatt 84/47

(45) Bekanntmachung des Hinweises auf die Patenterteilung : 27.07.88 Patentblatt 88/30

(84) Benannte Vertragsstaaten :
AT BE CH DE FR GB IT LI LU NL SE

(56) Entgegenhaltungen :
DD-A- 139 153
DE-A- 2 841 763
DE-A- 2 846 484
DE-A- 3 017 563
US-A- 3 695 404
US-A- 4 211 315

(73) Patentinhaber : Csepel Autogyár
Pf. 38
H-2311 Szigetszentmiklos (HU)

(72) Erfinder : Töröcsik, Lászlo, Dipl.-Ing.
Budapest
Kakukk u. 10b. H-1126 (HU)
Erfinder : Geiger, Gyula, Dipl.-Ing.
Budapest
Marx K. u. 131. H-1202 (HU)
Erfinder : Lehoczki, Gyula, Dipl.-Ing.
Dunavarsány
Bethlen G. u. 3. H-2336 (HU)
Erfinder : Ötvös, István, Dipl.-Ing.
Kerekegyháza
Engels u. 78. H-6041 (HU)

(74) Vertreter : Patentanwälte Viering & Jentschura
Steinsdorfstrasse 6
D-8000 München 22 (DE)

EP 0 125 377 B1

**Beschreibung**

Die Erfindung bezieht sich auf eine Kupplung mit Reibteller, wobei die axial bewegliche Druckplatte mittels einer Membranfeder über den Reibteller auf das Schwungrad gepreßt wird und die Druckplatte über flexible Bänder mit dem Kupplungsgehäuse verbunden ist.

Diese flexiblen Bänder dienen in erster Reihe dazu, das vom Motor abgegebene Drehmoment auf die Druckplatte zu übertragen und die Druckplatte zentrisch zu führen. In einigen Fällen haben diese Bänder auch die Aufgabe, die Druckplatte beim Auskuppeln der Kupplung vom Reibteller abzuheben; hierbei sind die Bänder entsprechend vorgespannt.

Die bisher bekannten Kupplungen mit flexiblen Bändern haben ohne Ausnahme den Nachteil, daß die Federkraft dieser flexiblen Bänder derjenigen der Membranfeder entgegenwirkt. Dadurch vermindert sich die die Momentübertragung sichernde ursprüngliche Federkraft stufenweise beim Verschleißen der Reibbeläge, und wenn der Verschleiß der Reibbeläge das zugelassene Maximum erreicht hat, ist das Gleitmoment der Kupplung am geringsten. Dieser Nachteil kommt in gesteigertem Maße zum Vorschein, wenn die flexiblen Bänder zum Abheben der Druckplatte beim Auskuppeln vorgespannt sind. Zur Beseitigung dieses Nachteiles sind die Ausführungsformen gemäß DD-A-139 153 und US-A-3 695 404 bestimmt. Das Wesen beider Ausführungsformen besteht darin, die Federkonstante und dadurch auch die negative Wirkung der Federkraft der flexiblen Bänder durch Erhöhung der Länge der flexiblen Bänder zu vermindern. Diese Ausführungsformen haben den gemeinsamen Nachteil, daß die negative Wirkung nicht beseitigt ist, und gleichzeitig konstruktive Schwierigkeiten durch die Länge der Bänder vorliegen, was nur durch Kompromisse zu lösen war.

Ziel der Erfindung ist es, den erwähnten Nachteil ohne nachteilige konstruktive Lösungen zu beheben. Die Erfindung basiert auf der Erkenntnis, daß durch eine neue Anordnung der flexiblen Bänder eine Kraft erzeugt werden kann, die sich mit der Federkraft der Membranfeder unter Erhöhung von deren Federkraft addiert und dadurch die Momentübertragungsfähigkeit der Kupplung erhöht, so daß sich das Gleitmoment der Kupplung trotz des Verschleißes der Reibbeläge nicht vermindert.

Gegenstand der Erfindung ist somit eine Kupplung mit Membranfeder-Reibteller, insbesondere für Kraftfahrzeuge, mit das Kupplungsgehäuse und die Druckplatte verbindenden und die Druckplatte bei der Drehung des Kupplungsgehäuses mitschleppenden flexiblen Bändern, wobei die Bänder mit der Druckplattenfläche einen um mindestens 5° größeren Winkel einschließen als der aus der Länge zwischen den Einschließungspunkten des Bandes und aus der Größe des zugelassenen Verschleißes der Reibelemente berechnete Winkelwert, und wobei der am Kupplungsgehäuse befindliche Einschließungspunkt der Bänder näher an der Schwungradfläche liegt als ihr an der Druckplatte befindlicher Einschließungspunkt.

Bei einer vorteilhaften Ausführungsform der erfindungsgemäßen Kupplung mit Membranfeder-Reibteller sind die Bänder sowohl am Kupplungsgehäuse als auch an der Druckplatte in ihrer eigenen Fläche verdrehbar befestigt.

Die Verwendung der Erfindung hat mehrere Vorteile, denn durch die Erfindung kann eine Kupplung mit größerem Moment bei Anwendung der gleichen Membranfeder gebaut werden; die Beanspruchung der Ausrückeinrichtung ist geringer; von den flexiblen Bändern wird das Verhalten der Kupplung aufgrund des Verschleißes ausgeglichen.

Ein weiterer Vorteil kann darin bestehen, daß die Bänder mit zunehmendem Verschleiß nicht zunehmend beansprucht werden.

Die Erfindung wird anhand eines Ausführungsbeispiels und der Zeichnungen näher erläutert. In der Zeichnung zeigt:

Fig. 1. die Seitenansicht einer erfindungsgemäßen Kupplung,

Fig. 2. die Draufsicht der erfindungsgemäßen Kupplung aus Fig. 1,

Fig. 3. das Kräftedreieck der infolge der flexiblen Bänder auftretenden Kräfte und

Fig. 4. das Diagramm mit der Charakteristik der Kupplung und mit der Entwicklung der Abhebekraft.

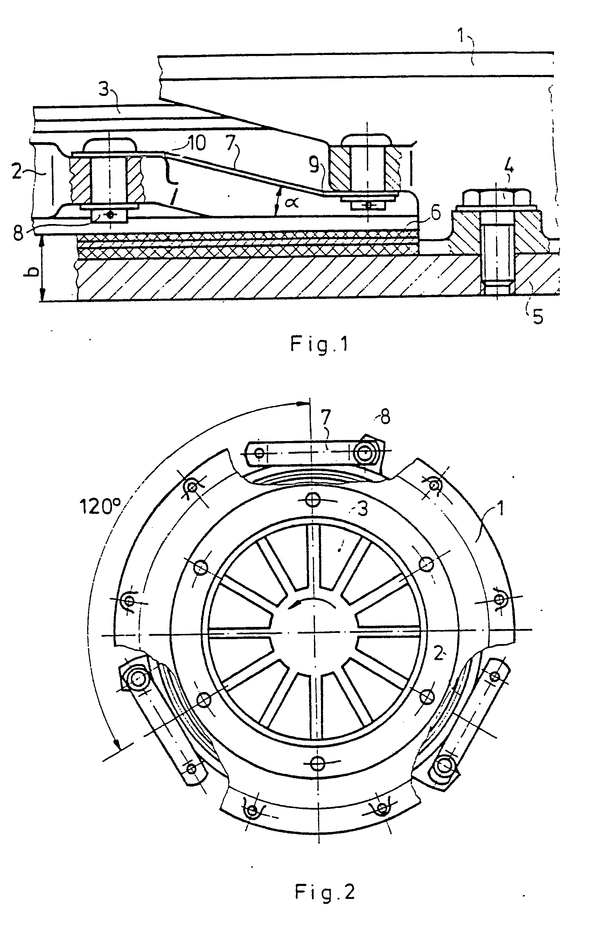

Die in Fig. 1. und 2. dargestellte Kupplung besteht in der bekannten Weise aus einem Kupplungsgehäuse 1, aus einer Druckplatte 2, aus einer Membranfeder 3 und aus einem Reibteller 6. Das Kupplungsgehäuse 1 ist mittels Schrauben 4 an einem Schwungrad 5 eines Verbrennungsmotors befestigt. Die Druckplatte 2 ist über radial im Abstand von der Kupplungsachse angeordnete, tangential zu dieser verlaufende Bänder 7 mit dem Kupplungsgehäuse 1 verbunden. Im dargestellten Fall sind drei Bänder angeordnet, aber nötigenfalls kann ihre Anzahl erhöht werden. Die Bänder 7 sind mittels ihr Verschwenken um parallel zur Kupplungsachse verlaufende Schwenkachsen zulassenden Bolzen 8 am Kupplungsgehäuse 1 und an der Druckplatte 2 befestigt.

Die Kupplung rotiert in der mit dem Pfeil in Fig. 2 bezeichneten Richtung; dabei nimmt das Kupplungsgehäuse 1 die Druckplatte 2 mittels der Bänder 7 durch Zug mit.

Sowohl am Kupplungsgehäuse 1 als auch an der Druckplatte 2 ist eine zu der Druckplattenfläche parallele Auffangfläche oder Abstützfläche ausgebildet, und an diesen Auffangflächen sind die Bänder 7 an der dem Schwungrad 5 zugewendeten Unterseite ihres an der Druckplatte 2 befestigten Bandendes bzw. an der dem Schwungrad 5 abgewendeten Oberseite ihres an dem Kupplungsgehäuse 1 befestigten Bandendes aufgefangen. Mit Rücksicht darauf, daß die an der Druckplatte 2 ausgebildete Auffangfläche in größerem axialen Abstand von der Fläche des Schwungrades 5 angeordnet ist als die Auffangfläche am Kupplungsgehäuse, ist das Band 7 doppelt abgewinkelt, wobei das eine Bandende entgegengesetzt zum anderen Bandende hin abgewinkelt ist und die Bandenden mit der Bandfläche einen stumpfen Winkel einschließen. Der Bandabschnitt zwischen den beiden Einspann- oder Einschließungspunkten 9, 10 schließt mit der Fläche der Druckplatte 2 einen Winkel α ein. Unter Einschließungspunkt sind diejenigen Punkte des Bandes 7 zu verstehen, zwischen welchen dessen Deformation nicht durch Abstützung begrenzt ist. In diesem Fall sind die zwei Einschließungspunkte die Ecke 9 der Auffangfläche am Kupplungsgehäuse 1 und die Ecke 10 der Auffangfläche an der Druckplatte 2.

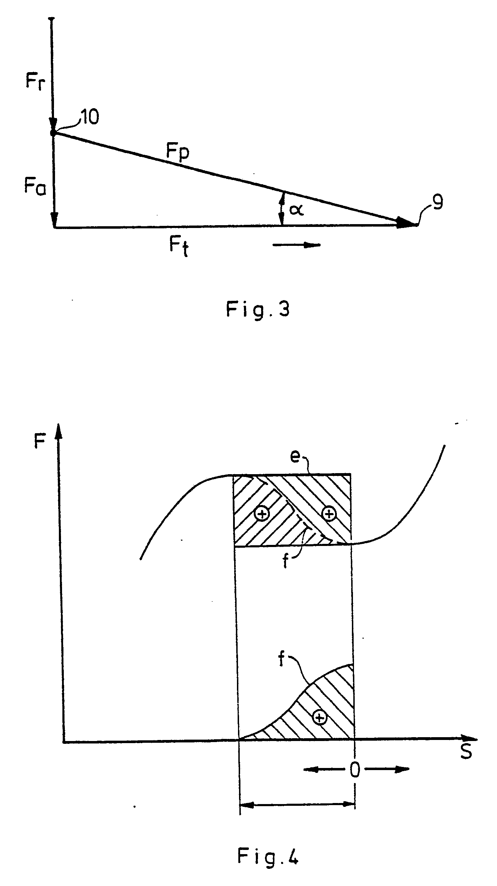

Die erfindungsgemäße Lösung ist anhand der Fig. 3 leichter zu verstehen. Bei der Rotation des Schwungrades 5 und damit zusammen des Kupplungsgehäuses 1 erzeugt die das Drehmoment zustandebringende tangentiale Umfangskraft $F_t$ in den Bändern 7 eine Kraft $F_p$ in Bandrichtung, und diese erzeugt auf der Druckplatte 2 eine senkrecht auf das Schwungrad 5 gerichtete Kraft $F_a$. Durch diese Kraft $F_a$ wird die Kraft $F_r$ der Membranfeder 3 vergrößert.

Infolge des Verschleißes der Reibelemente, d. h. der Druckplatte 2, des Schwungrades 5 und des Reibtellers 6 vermidert sich der zwischen der Fläche der Druckplatte 2 und dem Band 7 eingeschlossene Winkel α. Dieser Winkel beträgt bei den üblichen Kupplungen 2,5-3°. Damit die aus der erfindungsgemäßen Lösung stammende günstige Wirkung auch bei verschlissenen Reibelementen zustandekommt, ist es zweckmäßig, den Winkel α größer zu wählen.

Wenn die Momenterhöhung nicht benötigt ist, kann bei derselben Kupplung eine proportional schwächere Membranfeder verwendet werden. In diesem Fall wird die Belastung der Abhebeeinrichtung kleiner.

Mit entsprechender Bemessung kann die Momentübertragungsfähigkeit der Kupplung während der ganzen Lebensdauer des Reibbelags im wesentlichen auf dem gleichen Niveau gehalten werden, und die Charakteristik der Kraft und des Moments ist wesentlich flacher. Die dazu erforderlichen konstruktiven Mittel sind einfach und billig und benötigen keine erwähnenswerten Modifizierungen in der üblichen Ausbildung der Kupplungen mit Membranfeder.

Im Diagramm in Fig. 4. sind and der Abszisse die infolge des Verschleißes der Reibelemente entstandene Verschiebung S der Druckplatte und an der Ordinate die Kraft F der Membranfeder bzw. die Federkraft des Bandes bezeichnet. Mit Rücksicht darauf, daß sich diese beiden Kräfte überlagern, ist es ersichtlich, daß die resultierende Charakteristik e während der ganzen Lebensdauer im wesentlichen konstant bleibt.

Auf die Bänder wirkt über die bisher beschriebenen hinaus auch eine Kraft in der Bandfläche. Diese entsteht daraus, daß die Abmessungen der Kupplung im kalten und im warmen Zustand für die einzelnen Kupplungsteile nicht zueinander proportional ist. Während des Betriebes erwärmt sich die Druckplatte stärker als das Kupplungsgehäuse, und auch ihre Abmessungen verändern sich in größerem Maße. Deshalb werden die beiden Bandenden in radialer Richtung nicht gleichmäßig verlagert. Daher werden die Bänder auch in ihrer eigenen Fläche gekrümmt oder verwunden, wenn die Bänder mittels Bolzen oder Schrauben an der Druckplatte oder am Kupplungsgehäuse steifbefestigt sind. Diese Beanspruchung ist sehr nachteilig. Es wir daher zur Vermeidung dieses Nachteils vorgezogen, die Bänder mittels derartiger Bolzen zu befestigen, daß ihr Verschwenken um die Bolzenachse zugelassen ist.

## Patentansprüche

1. Membranfederkupplung, insbesondere für Kraftfahrzeuge, bei welcher eine Membranfeder (3) im eingekuppelten Zustand der Kupplung über eine Druckplatte (2) auf einen Reibteller (6) zu dessen Andrücken gegen ein Schwungrad (5) einwirkt und die Druckplatte (2) von dem sich mit dem Schwungrad (5) drehenden Kupplungsgehäuse (1) über tangential zu der Druckplatte (2) verlaufende Bänder (7) mitnehmbar ist, die schräg zu einer Drehebene der Druckplatte (2) verlaufen, dadurch gekennzeichnet, daß die Abstützstelle (9) der Bänder (7) am Kupplungsgehäuse (1) näher an dem Schwungrad (5) liegt als die Abstützstelle (10) der Bänder (7) an der Druckplatte (2) und daß der Winkel (α) zwischen den Bändern (7) und der Drehebene der Druckplatte (2) um mindestens 5° größer ist, als der Winkel, der sich aus dem Verhältnis von zugelassenem Verschleißwege der Reibelemente (2, 5) des Reibtellers (6) zu Bandlänge zwischen den Einschließungspunkten (9, 10) ergibt.

2. Membranfederkupplung nach Anspruch 1, dadurch gekennzeichnet, daß die Bänder (7) sowohl am Kupplungsgehäuse (1) als auch an der Druckplatte (2) in ihrer eigenen Fläche drehbar befestigt sind.

## Claims

1. Diaphragm spring clutch, especially for motor vehicles, in which a diaphragm spring (3) acts in clutched condition of the clutch via a pressure plate (2) on a friction disc (6) to press it against a fly wheel (5), and the pressure plate (2) can be driven by the clutch housing (1) rotating with the fly wheel (5) by strips extending tangentially with respect to the pressure plate (2) and extending obliquely with respect to the plane of rotation of the pressure plate (2), characterized in that the support point (9) of the strips (7) on the clutch housing (1) lies nearer to the fly wheel (5) than the support point (10) of the strips on the pressure plate (2), and that the angle (α) between the strips (7) and the plane of rotation of the pressure plate (2) is larger by at least 5° than the angle that results from the ratio of the allowed wear path of the friction elements (2, 5) of the friction disc (6) to the length of the strips between the bordering points (9, 10).

2. Diaphragm spring clutch according to claim 1, characterized in that the strips (7) are attached to the clutch housing (1) as well as to the pressure plate (2) to be pivotable in their own plane.

**Revendications**

1. Embrayage à ressort à diaphragme, en particulier pour véhicules, dans lequel un ressort à diaphragme (3) agit, à l'état embrayé de l'embrayage, via un plateau de pression (2) sur un plateau de friction (6) afin de le repousser contre un volant (5) et le plateau de pression (2) est susceptible d'être entraîné par le carter d'embrayage (1) tournant avec le volant (5) par l'intermédiaire de lames ou bandes (7) disposées tangentiellement au plateau de pression (2) et qui sont inclinées par rapport à un plan de rotation du plateau de pression (2), caractérisé en ce que la zone d'appui (9) des lames (7) sur le carter d'embrayage (1) est plus proche du volant (5) que la zone d'appui (10) des lames (7) sur le plateau de pression (2) et en ce que l'angle (alpha) entre les lames (7) et le plan de rotation du plateau de pression (2) est supérieur d'au moins 5° à l'angle donné par la hauteur d'usure admissible des éléments de friction (2, 5) du plateau de friction (6) rapportée à la longueur des lames entre les points d'encastrement (9, 10).

2. Embrayage à ressort à diaphragme selon la revendication 1, caractérisé en ce que les lames (7) sont fixées au carter d'embrayage (1) ainsi qu'au plateau de pression (2), par l'intermédiaire de leur propre surface et en étant susceptibles de tourner.

Fig.1

Fig.2

Fig. 3

Fig. 4

2